# EUROPÄISCHE PATENTSCHRIFT

(11) **EP 1 172 676 B1**
(45) Veröffentlichungstag und Bekanntmachung des Hinweises auf die Patenterteilung: **19.02.2003**
(21) Anmeldenummer: 01114470.6
(22) Anmeldetag: 15.06.2001
(51) Int. Cl.: G02B 7/00, B23Q 1/34

(54) **Anordnung zur temperaturkompensierten, mehrdimensionalen Mikropositionierung von zueinander lagedefinierten optischen Komponenten**
Thermally-compensated mounting, multidimensional micropositioning of spatially mutually aligned optical components
Monture thermo-compensée, micropositionement multidimensionel de composants optiques mutuellement spatialement alignés

(30) Priorität: 14.06.2000 DE 10029306
(43) Veröffentlichungstag der Anmeldung: 16.01.2002
(73) Patentinhaber: Physik-Instrumente (PI) GmbH & Co.KG, 76337 Waldbronn (DE)
(72) Erfinder: Müller, Klaus-Dieter, Dr., 76199 Karlsruhe (DE); Marth, Harry, Dr., 76337 Waldbronn-Etzenrot (DE)
(74) Vertreter: Kruspig, Volkmar, Dipl.-Ing.

(56) Entgegenhaltungen:
- EP-A- 0 964 281
- DD-A- 281 031
- US-A- 4 686 440

## Beschreibung

Die Erfindung betrifft eine Anordnung zur temperaturkompensierten, mehrdimensionalen Mikropositionierung von zueinander lagedefinierten optischen Komponenten, umfassend eine Führungseinheit zur Aufnahme der optischen Komponenten sowie mehrere Piezoaktoren gemäß Oberbegriff des Patentanspruchs 1.

Es ist bekannt, bei Fabry-Perot-Interferometern Vielfachreflexionen in einem gasförmigen Medium eines konstanten Brechungsindex zu nutzen, wobei das gasförmige Medium von zwei durchlässigen, einseitig verspiegelten und parallel zueinander ausgerichteten Platten eingeschlossen wird. Zwischen den beiden Spiegelplatten kommt es dann zu den erwähnten, auswertbaren Vielfachreflexionen. In Abhängigkeit vom Spiegelabstand findet nur für eine Wellenlänge eine konstruktive Interferenz und Transmission statt. Auf diese Weise kann man mit einer sehr kleinen Bewegung der Spiegelplatten zueinander einen Wellenlängenbereich von wenigen Zehntel Nanometern, den sogenannten freien Spektralbereich untersuchen und so auch kleinste Verschiebungen oder Vergrößerungen einzelner Spektrallinien bestimmen. Der Spiegelplattenabstand ist mit Piezoelementen mehr oder weniger geregelt einstellbar.

Aus Optical Engineering, Vol.37, Nr. 7, April 1998, Seiten 1229 bis 1234, sind verschiedene piezoelektrische Aktoren für optische Anwendungen bekannt. So wird dort ein sogenannter Piezoaktor vom Stack Type vorgestellt, welcher aus einer Stapelanordnung aus hintereinander geschalteten Einzelelementen besteht. Mit solchen Stapelaktoren können relativ große Verstellwege realisiert werden. Zur zweidimensionalen Verstellung sind zylindrisch oder in Parallelogrammform angeordnete Aktoren zum Stand der Technik gehörend, wobei zum Detektieren der momentanen Position auch die Integration von bevorzugt optischen Sensoren bekannt ist, damit insbesondere bei optischen Systemen eine geregelte Piezobewegung möglich wird.

Es hat sich jedoch gezeigt, dass die bisher vorgestellten längenveränderlichen Aktoren aus Führungseinheit und Piezoantrieb speziellen Anwendungen insbesondere mit Blick auf die notwendige Temperaturstabilität und -unabhängigkeit nicht oder nicht ausreichend genügen. Eine Verbesserung der verkippungs-, verschleiß- und spielfreien Bewegung optischer Bauteile zueinander gelingt regelmäßig nur mit nicht vertretbar hohen Aufwendungen, die zu einer wesentlichen Verteuerung herzustellender Mess- oder Untersuchungseinrichtungen führen.

Aus dem Vorgenannten ist es daher Aufgabe der Erfindung, eine weitergebildete Anordnung zur temperaturkompensierten, mehrdimensionalen Mikropositionierung von zueinander lagedefinierten optischen Komponenten anzugeben, mit deren Hilfe in besonders kostengünstiger Weise ein mechanisches Führungssystem vorgestellt werden kann, das konstruktiv einfach und damit technologisch leicht umsetzbar ist.

Die Lösung der Aufgabe der Erfindung erfolgt mit einer Anordnung gemäß den Merkmalen des Patentanspruchs 1, wobei die Unteransprüche mindestens zweckmäßige Ausgestaltungen und Weiterbildungen umfassen.

Der Grundgedanke der Erfindung liegt demgemäß darin, die Führungseinheit der Anordnung zur temperaturkompensierten, mehrdimensionalen Positionierung von optischen Komponenten aus zwei beabstandeten Platten oder Ringen zu realisieren, wobei zwischen den Ringen oder Platten mehrere beabstandete Festkörpergelenke angeordnet sind. Die Festkörpergelenke können in bolzenartige Verbindungsmittel der Führungseinheit integriert sein oder diese umfassen. Die Führungseinheit mit Platten, Bolzen und/oder Festkörpergelenken kann sowohl durch Fügen mehrerer Einzelkomponenten als auch monolithisch, d.h. einstückig ausgebildet werden.

Den Festkörpergelenken bzw. Bolzen benachbart sind Piezoaktoren derart fixiert, dass auf die Ringe oder Platten Verstell- bzw. Positionierkräfte zur Einwirkung gelangen können.

Mindestens die die optischen Komponenten aufnehmenden Flächen der Ringe oder Platten, d.h. die Außenstirnflächen, sind mit einem Material entsprechend demjenigen der optischen Komponenten beschichtet, wobei die Beschichtung vor dem Aufsprengen der optischen Komponenten zur eindeutigen Lagedefinition in geeigneter Weise bearbeitbar ist. Erfindungsgemäß bestehen die Führungseinheit und die optischen Komponenten aus einem Material von im wesentlichen gleichen Temperaturkoeffizienten. Bevorzugt ist das Material für die Führungseinheit Invar und das Material der optischen Komponente Quarz respektive Quarzglas. Die Beschichtung wird ebenfalls aus Quarz, z.B. durch Sputtern oder Bedampfen oder dergleichen Auftragsverfahren realisiert. Die Beschichtungsschicht kann zum Erhalt der gewünschten Lage der optischen Komponenten zueinander in geeigneter Weise bearbeitet, z.B. poliert werden.

Die Innenseiten der Platten oder Ringe weisen mehrere verteilte, leitfähige Flächen auf, welche jeweils kapazitive Sensoren zur Erfassung von Lage- und/oder Positionsänderungen der Platten bzw. der dort aufgebrachten optischen Komponenten bilden.

In einer Ausführungsform der Erfindung besitzen die Platten oder Ringe jeweils eine im wesentlichen zentrische Öffnung oder einen Durchbruch, wobei die jeweilige Rückseite oder ein integraler Fortsatz der optischen Komponente die Öffnung bedeckt oder hindurchreicht. An der Rückseite oder der Stirnfläche des jeweiligen Fortsatzes sind dann mehrere, verteilte, leitfähige Flächen angeordnet, welche mit den gegenüber liegenden Flächen jeweils kapazitive Abstandssensoren bilden, so dass in leichter Weise ein Regelkreis zum Ansteuern der Piezoaktoren realisierbar ist.

Bevorzugt umfasst die Führungseinheit umfangsseitig drei gleichverteilt beabstandete Festkörpergelenke oder solche Gelenke aufweisende Bolzen, wobei jeweils ein Piezoaktor zwischen zwei Festkörpergelenken bzw. Bolzen angeordnet ist.

Wie bereits erwähnt, kann aus den Lage- und Positionsänderungswerten der kapazitiven Sensoren ein Ableiten von Steuer- oder Regelsignalen für das Betreiben der Piezoaktoren vorgenommen werden, so dass eine gewünschte Stellposition gehalten oder eine neue Position mit Rückmeldung eingestellt werden kann.

Die Festkörpergelenke und die Piezoaktoren sind bevorzugt jeweils alternierend im 120°-Abstand zwischen den Platten oder Ringen angeordnet oder fixiert. Die kapazitiven Sensoren bzw. Sensorflächen sind ebenfalls jeweils um im wesentlichen 120° beabstandet ausgebildet, wobei zugehörige Flächen, einen Messkondensator darstellend, jeweils gegenüberliegen.

Als Piezoaktoren sind bevorzugt einzeln ansteuerbare Piezo-Stapel-Anordnungen verwendbar.

Alle eingesetzten Materialien sind so aufeinander abgestimmt, dass bei Temperatureinwirkung auf die Aktoreinheit keine Abstandsänderung der optischen Bauteile zueinander auftritt. Die Verbindung zwischen der Führungseinheit und den optischen Bauteilen oder Komponenten kann durch eine z.B. Sputterschicht realisiert werden, wobei diese Schicht aus dem Werkstoff der optischen Bauteile selbst besteht. Die aufgebrachten Verbindungsschichten können vor dem endgültigen Fixieren der optischen Komponenten hochpräzise parallel zueinander geschliffen werden, so dass eine definierte Ausgangslage der optischen Komponenten nach deren Befestigen an der Anordnung, z.B. durch Ansprengen, gegeben ist. Die kapazitiven Sensorfelder oder Sensorflächen auf den inneren Stirnseiten der optischen Bauteile bzw. des Fortsatzes oder aber auch der Platten oder Ringe können durch Sputtern, Bedampfen oder Clusterabscheidung erzeugt werden.
Die Erfindung vereint mit der vorgestellten Anordnung eine optimale Sensorik, welche systemimmanent ist und die keinen zusätzlichen Bauraum benötigt oder die gewünschten Eigenschaften der optischen Elemente nachteilig beeinflusst, mit einer konsequenten temperaturkompensierten Ausführung. Konkret wird unter letzterem Aspekt auf bisher notwendige mehrlagige Zwischenschichten verzichtet, welche nicht nur bezüglich der Temperaturstabilität nachteilig sind, sondern darüber hinaus höhere technologische Aufwendungen nach sich ziehen.

Die Erfindung soll nachstehend anhand eines Ausführungsbeispiels sowie unter Zuhilfenahme von Figuren näher erläutert werden.

Hierbei zeigen:
- Fig. 1: eine Führungseinheit umfassend zwei über Festkörpergelenke miteinander verbundene Kreisringe;
- Fig. 2: eine Darstellung der Führungseinheit, jedoch mit bereits befestigten Piezoaktoren;
- Fig. 3: eine Darstellung der Führungseinheit mit einer optischen Komponente, die an einem inneren Fortsatz Sensorflächen zur Bildung einer kapazitiven Abstandsmess-Sonde aufweist; und
- Fig. 4: eine komplette Anordnung mit zwei jeweils an den Stirnseiten der Kreisringe befestigten optischen Komponenten und im Inneren sich gegenüberliegenden Sensorflächen.

Bei dem Ausführungsbeispiel nach den Figuren wird von einer Anordnung mit zwei gegenüberliegenden Kreisringen 1 ausgegangen, die über Bolzen 2 zueinander beabstandet gehalten sind. Die Bolzen 2 weisen ein integriertes Festkörpergelenk 3 auf.

Konkret sind die Bolzen 2 in 120°-Abstand umfangsseitig auf den Kreisringen 1 verteilt und letztere verbindend angeordnet. Die Kreisringe 1, aber auch die Bolzen 2 können durch spanende, drahterosive oder durch Laserbearbeitung hergestellt werden. Die Einzelteile sind in an sich bekannter Technik durch Fügen verbindbar, wobei jedoch auch die Möglichkeit besteht, die komplette Führungseinheit einstückig, d.h. monolithisch zu fertigen.

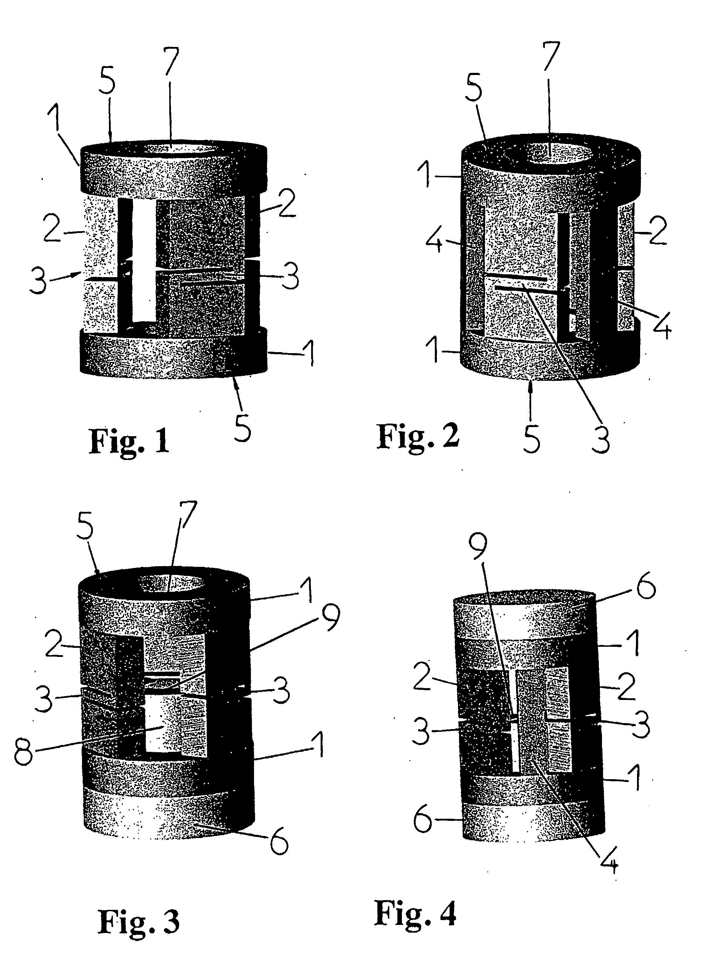

Die so vorgefertigte Führungseinheit nach Fig. 1 wird dann mit Piezoaktoren 4, z.B. sogenannnten Stapelaktoren nach Fig. 2 komplettiert. Die Piezoaktoren 4 werden zwischen den Bolzen 2, d.h. zu diesen alternierend und bevorzugt gleich beabstandet angeordnet. Ausdehnungsbewegungen der Piezoaktoren 4 in deren Längsachsenrichtung führen zu einer gezielten Krafteinwirkung auf die Kreisringe mit einer reproduzierbaren Lageveränderung.

Die äußeren Stirnseiten 5 der Kreisringe 1 werden mit demselben Material beschichtet, aus dem auch die aufzubringenden optischen Komponenten bestehen. Eine solche Beschichtung kann durch Sputtern, Bedampfen oder dergleichen Verfahren erfolgen. Eine ausreichende Haftung der Beschichtung ist dadurch gegeben, dass die thermischen Ausdehnungskoeffizienten der entsprechenden Materialien der Führungseinheit und der optischen Komponenten aufeinander abgestimmt werden.

Im Ausführungsbeispiel bestehen die optischen Komponenten aus Quarz und die Führungseinheit aus Invar. Die Beschichtungslage besteht ebenfalls aus Quarz. Nach erfolgtem Beschichtungsschritt werden die Stirnflächen 5 mit optischer Qualität poliert bzw. planparallel geschliffen, so dass die in den Fig. 3 und 4 gezeigten optischen Komponenten 6 z.B. durch Ansprengen befestigt werden können.

In die Öffnung 7 der Kreisringe 1 reicht gemäß den Darstellungen nach Fig. 3 und 4 ein Fortsatz 8 der jeweiligen optischen Komponenten hinein. An den gegenüberliegenden Flächen 9 des Fortsatzes 8 sind Metallflächen bzw. metallische oder leitfähige Felder angeordnet oder aufgebracht, die Abstandsmess-Kondensatoren bilden.

Bevorzugt werden drei Felder in 120°-Anordnung ausgeführt. Nach elektrischer Kontaktierung der Flächen werden diese wie dargelegt als kapazitive Sensoren genutzt, um die exakte Lage der Stirnseiten der optischen Komponenten zueinander zu bestimmen, so dass im Anschluss die Messwerte für eine Einzelansteuerung der Piezoaktoren 4 verwendbar sind, um den Stirnflächenabstand z.B. hochparallel auszurichten.

Alternativ oder zusätzlich können auch auf den Innenseiten der Kreisringe 1 kapazitive Sensoren befindlich sein, wobei allein die baulichen Abmessungen und die realisierbaren Abstände gegenüberliegender Kondensatorflächen maßgeblich sind.

### Bezugszeichenliste

- 1: Kreisringe
- 2: Bolzen
- 3: integriertes Festkörpergelenk
- 4: Piezoaktor
- 5: äußere Stirnseite der Ringe
- 6: optische Komponente
- 7: Öffnung im Kreisring
- 8: Fortsatz
- 9: Kondensatorflächen

## Patentansprüche

1. Anordnung zur temperaturkompensierten, mehrdimensionalen Mikropositionierung von zueinander lagedefinierten optischen Komponenten, umfassend eine Führungseinheit zur Aufnahme der optischen Komponenten sowie mehrere Piezoaktoren,
**dadurch gekennzeichnet, dass**
die Führungseinheit aus zwei beabstandeten Platten oder Ringen besteht, wobei zwischen den Ringen oder Platten mehrere seitlich beabstandete Festkörpergelenke angeordnet sind,
den Festkörpergelenken benachbart die Piezoaktoren derart fixiert sind, dass auf die Ringe oder Platten Verstellkräfte einwirken,
mindestens die die optischen Komponenten aufnehmenden Flächen der Ringe oder Platten mit einem Material entsprechend demjenigen der optischen Komponenten beschichtet sind, wobei die Beschichtung vor dem Befestigen, insbesondere Aufsprengen der optischen Komponenten zur Lagedefinition dieser bearbeitbar ist und
die Führungseinheit sowie die optischen Komponenten aus einem Material von im wesentlichen gleichen Temperaturkoeffizienten bestehen.

2. Anordnung nach Anspruch 1,
**dadurch gekennzeichnet, dass**
die Innenseiten der Platten oder Ringe mehrere verteilte leitfähige Flächen aufweisen, welche jeweils kapazitive Sensoren zur Erfassung von Lage- und/oder Positionsänderungen bilden.

3. Anordnung nach Anspruch 1,
**dadurch gekennzeichnet, dass**
die Platten oder Ringe jeweils eine im wesentlichen zentrische Öffnung oder einen Durchbruch aufweisen, wobei die jeweilige Rückseite oder ein Fortsatz der optischen Komponente die Öffnung bedeckt oder hindurchreicht und weiterhin an der Rückseite oder der Stirnfläche des Fortsatzes mehrere verteilte leitfähige Flächen angeordnet sind, welche mit den gegenüberliegenden Flächen jeweils kapazitive Abstandssensoren bilden.

4. Anordnung nach einem der vorangegangenen Ansprüche,
**dadurch gekennzeichnet, dass**
die Führungseinheit drei gleichverteilt beabstandete Festkörpergelenke aufweist, wobei jeweils ein Piezoaktor zwischen zwei Festkörpergelenken angeordnet ist.

5. Anordnung nach einem der vorangegangenen Ansprüche,
**dadurch gekennzeichnet, dass**
die Platten oder Ringe und die Führungseinheit aus einem monolithischen Körper bestehen.

6. Anordnung nach einem der vorangegangenen Ansprüche,
**dadurch gekennzeichnet, dass**
die Platten oder Ringe und die Führungseinheit aus Invar und die optischen Komponenten sowie die Beschichtung aus Quarz bestehen.

7. Anordnung nach einem der Ansprüche 2 bis 6,
**dadurch gekennzeichnet, dass**
aus den Lage- und/oder Positionsänderungswerten Mittel (?) der kapazitiven Sensoren Regel- oder Steuersignale für die Piezoaktoren abgeleitet werden.

8. Anordnung nach einem der Ansprüche 4 bis 7,
**dadurch gekennzeichnet, dass**
die Festkörpergelenke und die Piezoaktoren jeweils alternierend in 120°-Abstand zwischen den Platten oder Ringen angeordnet oder fixiert sind.

9. Anordnung nach Anspruch 2, 3 oder 8,
**dadurch gekennzeichnet, dass**
die kapazitiven Sensoren jeweils um 120° beabstandete Flächen aufweisen, wobei zugehörige Flächen jeweils gegenüberliegen.

10. Anordnung nach einem der vorangegangenen Ansprüche,
**dadurch gekennzeichnet, dass**
die Platten oder Ringe über bolzenartige Mittel zueinander beabstandet gehalten und die Festkörpergelenke jeweils bolzenintegriert sind.

11. Anordnung nach einem der vorangegangenen Ansprüche,
**gekennzeichnet durch**
Verwendung von einzeln ansteuerbaren Piezo-Stapel-Aktoren.

## Claims

1. An arrangement for the temperature-compensated, multi-dimensional micropositioning of mutually location-defined optical components, comprising a guide unit for accommodating the optical components as well as a plurality of piezoactuators,
**characterised in that**
the guide unit consists of two plates or rings spaced apart, a plurality of laterally spaced solid-state articulations being arranged between the rings or plates,
the piezoactuators are fixed in the vicinity of the solid-state articulations in such a way that displacement forces act on the rings or plates,
at least the surfaces of the rings or plates accommodating the optical components are coated with a material corresponding to that of the optical components, the coating being machinable prior to the attachment, especially the snap-on attachment, of the optical components for defining the location of the latter
and
The guide unit and the optical components consist of a material of essentially identical temperature coefficients.

2. An arrangement according to Claim 1,
**characterised in that**
the insides of the plates or rings exhibit a plurality of subdivided conductive areas which in each case form capacitive sensors for detecting changes in location and/or position.

3. An arrangement according to Claim 1,
**characterised in that**
the plates or rings have in each case a substantially central opening or a perforation, the respective posterior surface or a continuation of the optical component covering or extending through the opening, and furthermore a plurality of subdivided conductive areas being arranged on the posterior or the anterior surface of the continuation, the said conductive areas forming - with the areas positioned opposite -capacitive spacing sensors in each case.

4. An arrangement according to one of the preceding claims,
**characterised in that**
the guide unit has three solid-state articulations spaced so as to be evenly distributed, a piezoactuator being arranged between two solid-state articulations in each case.

5. An arrangement according to one of the preceding claims,
**characterised in that**
the plates or rings and the guide unit consist of a monolithic body.

6. An arrangement according to one of the preceding claims,
**characterised in that**
the plates or rings and the guide unit are composed of invar, and the optical components and the coating of quartz.

7. An arrangement according to Claims 2 to 6,
**characterised in that**
regulating and/or control signals for the piezoactuators are derived from the values for the change in location and/or change in position by means of the capacitive sensors.

8. An arrangement according to Claims 4 to 7,
**characterised in that**
the solid-state articulations and the piezoactuators are arranged or fixed between the plates or rings in each case alternating with a spacing of 120°.

9. An arrangement according to Claims 2, 3 or 8,
**characterised in that**
the capacitive sensors have areas spaced apart in each case by 120°, associated areas being in each case positioned opposite.

10. An arrangement according to one of the preceding claims,
**characterised in that**
the plates or rings are held spaced apart from one another by bolt-like means and the solid-state articulations are in each case bolt-integrated.

11. An arrangement according to one of the preceding claims,
**characterised by**
the use of individually actuable stack-type piezoactuators.

## Revendications

1. Monture pour le micropositionnement à température compensée, pluridimensionnel de composants optiques aux positions définies mutuellement, qui comprend une unité de guidage permettant la fixation de composants optiques ainsi que plusieurs piézo-acteurs, **caractérisée par le fait que** l'unité de guidage est composée de deux plaques ou anneaux espacés, entre lesquels plusieurs articulations à corps solides sont disposées, espacées latéralement, les articulations à corps solides sont fixées à côté des piézo-acteurs de telle sorte que des forces de transmission s'exercent sur les anneaux ou plaques, au moins les surfaces des plaques ou anneaux recevant les composants optiques étant enduites avec un matériau correspondant à celui des composants optiques, l'enrobage étant usinable avant l'assemblage, en particulier la fixation par élasticité des composants optiques pour définir leur position, et l'unité de guidage ainsi que les composants optiques étant composés d'un matériau ayant essentiellement les mêmes coefficients de température.

2. Monture selon la revendication 1, **caractérisée par le fait que** les faces internes des plaques ou anneaux comportent plusieurs surfaces conductrices réparties, qui forment chaque fois des capteurs capacitifs d'enregistrement des changements de situation et/ou de position.

3. Monture selon la revendication 1, **caractérisée par le fait que** les plaques ou les anneaux présentent à chaque fois une ouverture essentiellement centrale ou un perçage, la face postérieure correspondante ou un prolongement des composants optiques recouvrant ou passant par l'ouverture et en outre plusieurs surfaces conductrices réparties sont prévues sur la face postérieure ou la surface frontale du prolongement, qui constituent à chaque fois des capteurs capacitifs d'écartement avec les surfaces situées en face.

4. Monture selon l'une des revendications précédentes, **caractérisée par le fait que** l'unité de guidage possède trois articulations à corps solides de distribution régulière, un piézo-acteur étant à chaque fois disposé entre deux articulations à corps solides.

5. Monture selon l'une des revendications précédentes, **caractérisée par le fait que** les plaques ou anneaux et l'unité de guidage sont composés d'un corps monolithique.

6. Monture selon l'une des revendications précédentes, **caractérisée par le fait que** les plaques ou anneaux et l'unité de guidage sont composées d'invar, et les composants optiques ainsi que les articulations à corps solides sont faits de quartz.

7. Monture selon l'une des revendications 2 à 6, **caractérisée par le fait que** des signaux de réglage et de commande des piézo-acteurs sont déduits des valeurs de changement de situation et/ou de position, au moyen des capteurs capacitifs.

8. Monture selon l'une des revendications 4 à 7, **caractérisée par le fait que** les articulations à corps solides et les piézo-acteurs sont chaque fois disposés ou fixés à un écart alterné de 120° entre les plaques ou anneaux.

9. Monture selon la revendication 2,3 ou 8, **caractérisée par le fait que** les capteurs capacitifs comprennent chaque fois des surfaces qui sont espacées à 120°, les surfaces associées se trouvant à chaque fois en face.

10. Monture selon l'une des revendications précédentes, **caractérisée par le fait que** les plaques ou anneaux sont maintenus mutuellement à distance par des moyens du genre boulons et que les articulations à corps solides sont chacune intégrées aux boulons.

11. Monture selon l'une des revendications précédentes, **caractérisée par** l'utilisation de piézo-acteurs pilotés individuellement.
